# EUROPÄISCHE PATENTSCHRIFT

(11) **EP 2 774 252 B1**
(45) Veröffentlichungstag und Bekanntmachung des Hinweises auf die Patenterteilung: **11.05.2016**
(21) Anmeldenummer: 12783961.1
(22) Anmeldetag: 02.11.2012
(51) Int. Cl.: H02K 41/02, H02K 41/03

(54) **LINEARMOTOR MIT MEHREREN SENSOREINHEITEN UND MODULAREM STATORAUFBAU**
LINEAR MOTOR HAVING A PLURALITY OF SENSOR UNITS AND A MODULAR STATOR STRUCTURE
MOTEUR LINÉAIRE À PLUSIEURS ENSEMBLES CAPTEURS ET À STRUCTURE DE STATOR MODULAIRE

(30) Priorität: 02.11.2011 DE 102011085636
(43) Veröffentlichungstag der Anmeldung: 10.09.2014
(73) Patentinhaber: Hamilton Bonaduz AG, 7402 Bonaduz (CH)
(72) Erfinder: HOFSTETTER, Meinrad Franz, CH- 7012 Felsberg (CH); NAWROCKI, Eduard, CH- 7402 Bonaduz (CH); ROMER, Hanspeter, CH-8340 Hinwil (CH); KIRSTE, Vinzenz, 55270 Zornheim (DE)
(74) Vertreter: Müller Hoffmann & Partner
(86) Internationale Anmeldenummer: PCT/EP2012/071690
(87) Internationale Veröffentlichungsnummer: WO 2013/064614

(56) Entgegenhaltungen:
- DE-A1- 19 744 938
- JP-A- H11 150 973
- JP-A- 2005 039 941
- JP-A- 2010 142 033
- KR-A- 20110 057 033
- KR-A- 20110 057 034
- US-A- 5 994 798
- US-A1- 2011 109 252

## Beschreibung

Die vorliegende Erfindung betrifft einen Linearmotor, umfassend wenigstens eine Statoreinrichtung mit mehreren Permanentmagneten unterschiedlicher Polarisierung und mit wenigstens einer Trägerschiene, und wenigstens eine Läufereinrichtung mit wenigstens drei elektrischen Spulen und mit wenigstens einem an der Trägerschiene der Statoreinrichtung abstützbaren oder abgestützten Stützmittel, wobei die Läufereinrichtung und die Statoreinrichtung durch Wechselwirkung der Magnetfelder der Permanentmagneten mit den Magnetfeldern der bedarfsweise mit Strom durchflossenen Spulen relativ zueinander hin und her beweglich sind entlang einer durch die Trägerschiene festgelegten Fahrrichtung, wobei die Statoreinrichtung aus wenigstens einem Statormodul gebildet ist, wobei das Statormodul derart ausgeführt ist, dass eine Statoreinrichtung mit zwei oder mehr nacheinander angeordneten Statormodulen gebildet werden kann, und wobei am Statormodul wenigstens eine durch eine Sensoreinheit der Läufereinrichtung abtastbare Maßspur vorgesehen ist, die im Wesentlichen parallel zur Fahrrichtung verläuft.

Ein derartiger Linearmotor ist beispielsweise aus der EP 2 288 008 A2 bekannt.

Es hat sich gezeigt, dass bei der Verwendung von abtastbaren Maßspuren in Kombination mit aneinander anschließenden Statormodulen das Problem besteht, dass beim Aneinanderreihen von mehreren Statormodulen konstruktions- oder/und produktionsbedingte Zwischenräume entstehen. Diese Zwischenräume sind zwischen zwei benachbarten Statormodulen nicht immer gleich und können in einem gewissen Bereich variieren. Gemäß der EP 2 288 008 A2 ist es vorgesehen, dass die Maßspur durchgängig ausgebildet ist, also auch eventuelle Zwischenräume überbrückt. Hierdurch ergibt sich eine lange einstückige Maßspur, deren Herstellung und Anbringung aufwändig und teuer ist.

Aufgrund der Zwischenräume kann es auch zu Problemen oder/und Fehlern bei der genauen Positionierung kommen. Geht man beispielsweise von einem Linearmotor mit einer befahrbaren Länge von einem Meter aus, der aus vier Statormodulen gleicher Länge zusammengesetzt ist, gibt es insgesamt drei Zwischenräume. Geht man von einem Zwischenraum in der Größenordnung von 1 Millimeter aus, ergibt sich alle 0,25m ein systematischer Fehler in der Positionierung von 1mm. Der befahrbare Weg beträgt somit tatsächlich 1 Meter plus 3 Millimeter. Wird dieser Fehler bei der Positionierung nicht berücksichtigt kann dies je nach Anwendung unerwünschte Auswirkungen haben.

Insbesondere bei Vorrichtungen (Pipettierautomaten), wie sie die Anmelderin mit Linearmotoren einsetzt, kommt es auf eine genau Positionierung an, damit mittels des Linearmotors bewegte Pipettierspitzen exakt zu zugehörigen (beim Pipettiervorgang feststehenden) Probenbehältern positioniert werden können. Eine Abweichung von beispielsweise 2-3 Millimetern kann dazu führen, dass eine Pipettierspitze nicht zentriert in eine Probenbehälter eingeführt werden kann, sondern sehr nahe an dessen Rand, was im Hinblick auf die gleichmäßige Entnahme von Probenflüssigkeit (Kapillarkräfte zwischen Pipettierspitze und Probenbehälterinnenwand; stärkeres Anhaften von Probenflüssigkeit am Probenbehälterrand u.a.) nachteilig sein kann. Im Extremfall könnte der Positionsfehler auch dazu führen, dass die Pipettierspitze(n) durch den Rand des Probenbehälters am Eindringen in den Probenbehälter gehindert werden, was unter Umständen sogar zu Beschädigungen führen kann.

Die DE 19 744 938 schlägt zur Kompensation von Positionsfehlern die Verwendung einer Justiervorrichtung vor.

Aufgabe der Erfindung ist es daher, einen modulartig aufgebauten Linearmotor derart weiterzubilden, dass die obigen Nachteile vermieden werden können.

Hierzu wird erfindungsgemäß vorgeschlagen, dass an der Läufereinrichtung wenigstens zwei die Maßspur abtastende Sensoreinheiten vorgesehen sind, die in Fahrrichtung der Läufereinrichtung voneinander in einem Abstand angeordnet sind, derart, dass im Falle einer Anordnung der Läufereinrichtung an einer Verbindungsstelle zwischen zwei Statormodulen die jeweiligen Maßspuren auf den benachbarten Statormodulen durch jeweils eine der beiden Sensoreinheiten abtastbar sind.

Das gleichzeitige Abtasten von Maßspuren auf benachbarten Statormodulen ermöglicht es festzustellen, wie groß der Abstand zwischen den benachbarten Statormodulen bzw. Maßspuren ist. Dieser Abstand bzw. Zwischenraum zeigt sich insbesondere an einer durch die Sensoreinheiten abtastbare und auswertbare Verschiebung der Maßspur bezogen auf Erwartungswerte, die beispielsweise bei einer durchgehenden Maßspur gemessen werden müssten. Entsprechend kann die genaue Position der Läufereinrichtung beispielsweise bezogen auf einen Nullpunkt der Fahrstrecke an einem Ende der Statoreinrichtung, über eine Korrekturfunktion, in welcher das Ausmaß von Abständen/Zwischenräumen zwischen benachbarten Statormodulen berücksichtigt wird, bestimmt werden. Geht man exemplarisch von einem Abstand zwischen zwei benachbarten Statormodulen von etwa 1 Millimeter aus, kann die Position der Läufereinrichtung bezogen auf den Nullpunkt der Statoreinrichtung um die Summe der Abstände/Zwischenräume korrigiert werden in Abhängigkeit davon, auf welchem Statormodul die Positionsmessung vorgenommen worden ist, d.h. In Abhängigkeit davon, wie viele Zwischenräume bereits (vollständig) überfahren sind. Beispielsweise müsste die nur anhand der Maßspur auf dem zweiten Statormodul (ausgehend vom Nullpunkt der Statoreinrichtung) gemessene Position um einen Millimeter korrigiert werden: Um eine Position von 0,4m ausgehend vom Nullpunkt anzufahren bei einer Statormodullänge von 0,25m müsste die Läufereinrichtung also bei 0,399m positioniert werden unter Berücksichtigung des Abstands von 1 Millimeter zwischen den beiden ersten Statormodulen.

Vorzugsweise ist das Statormodul plattenartig ausgeführt mit zwei sich zwischen den beiden Modulenden erstreckenden Längsseiten, wobei weiter vorzugsweise das Statormodul eine in Querrichtung zwischen den Längsseiten ausgebildete Vertiefung aufweist, in welcher die Permanentmagnete angeordnet sind. Die wenigstens eine Maßspur kann dabei in Querrichtung zwischen einer der Längsseiten und den Permanentmagneten angeordnet sein.

Es wird vorgeschlagen, dass die Permanentmagneten flachstabartig ausgebildet sind, derart dass ihre jeweiligen längeren Seiten in Richtung der Längsseiten des Statormoduls weisen, wobei vorzugsweise die Längsseiten der Permantentmagnete und die die Längsseiten des Statormoduls geneigt zueinander ausgerichtet sind, vorzugsweise unter einem Winkel, der etwa 1 bis 10 Grad von einem rechten Winkel abweicht.

An den Längsseiten kann eine jeweilige Trägerschiene vorgesehen sein, vorzugsweise in Form eines nach außen gewölbten Profils, das insbesondere seitlich vom Statormodul vorsteht. Ein derartiges Profil kann in Eingriff mit einem komplementären Profil an der Läufereinrichtung sein bzw. gebracht werden, so dass die Läufereinrichtung entlang dieses Profils an der Statoreinrichtung gleiten kann.

Bevorzugt ist an der Läufereinrichtung ein magnetisches Rückschlussblech vorgesehen, an welchem von einer jeweiligen Spule umwickelte Rückschlusselemente ausgebildet sind, wobei vorzugsweise die Rückschlusselemente den Permanentmagneten zugewandt sind, insbesondere von der Läufereinrichtung bezogen auf eine betriebsmäßige Anordnung an der Statoreinrichtung nach unten gerichtet sind, und vorzugsweise nach unten über die Spulen vorstehen.

Es wird weiter vorgeschlagen, dass das wenigstens eine Statormodul ein erstes und ein zweites Modulende aufweist, wobei die Modulenden derart ausgeführt sind, dass zwischen einem ersten Modulende eines ersten Statormoduls und einem zweiten Ende eines zweiten Statormoduls eine formschlüssige Verbindung herstellbar oder hergestellt ist. Ein derartige Ausgestaltung zwecks formschlüssiger Verbindung ermöglicht eine präzise Aneinanderreihung von Statormodulen, wobei der Zwischenraum bzw. Abstand zwischen benachbarten Statormodulen gering gehalten werden kann. Ferner ermöglicht eine derartige Formschlussverbindung einen einfachen Aufbau einer aus Statormodulen gebildeten Statoreinrichtung eines Linearmotors. Bevorzugt ist die Formschlussverbindung auch lösbar ausgeführt, so dass eine Statoreinrichtung aus Statormodulen auch wieder in die einzelnen Statormodule aufgeteilt werden kann. Dies ermöglicht eine hohe Flexibilität beim Aufbau bzw. Umbau von Statoreinrichtungen, bei der Wartung (ggf. Austausch von einzelnen Statormodulen), sowie bei der Wiederverwendung von Statormodulen für einen Linearmotor an einer anderen übergeordneten Vorrichtung.

Es ist bevorzugt, dass das erste Modulende des Statormoduls einen in Längsrichtung vorstehenden Verbindungsabschnitt aufweist und dass das zweite Modulende eine in Längsrichtung ausgebildete Verbindungsaufnahme aufweist, derart, dass im verbundenen Zustand von zwei benachbarten Statormodulen die Formschlussverbindung zwischen dem Verbindungsabschnitt des ersten Statormoduls und der Verbindungsaufnahme des zweiten Statormoduls herstellbar bzw. hergestellt ist. Die Verbindungsaufnahme ist vorzugsweise derart angeordnet, dass sie unterhalb der Permanentmagnete liegt, so dass sie beim Verbinden von zwei benachbarten Statormodulen eine in Fahrrichtung durchgehende Aneinanderreihung von Permanentmagneten ergibt.

Am Statormodul können mehrere Bohrungen ausgebildet sein, die dazu vorgesehen sind, das Statormodul an einem Rahmen einer übergeordneten Vorrichtung mittels Bolzen oder Schrauben zu befestigen.

Weiterbildend wird vorgeschlagen, dass an dem wenigstens einen Statormodul mehrere Maßspuren vorgesehen sind, vorzugsweise eine Maßspur zur Abtastung einer absoluten Position auf dem betreffenden Statormodul, vorzugsweise eine Maßspur zur Abtastung von vorbestimmten Inkrementen entlang des Statormoduls und vorzugsweise eine das Statormodul innerhalb der Statoreinheit identifizierende Maßspur. Je nach Anzahl und Ausgestaltung der Maßspuren kann die Position der Läufereinheit relativ zur Statoreinrichtung bzw. relativ zu einem bestimmten Statormodul der Statoreinrichtung anhand der verschiedenen Maßspuren bestimmt werden. Im Falle von mehreren Maßspuren können die verschiedenen ermittelten Positionswerte pro Maßspur miteinander verglichen und auf diese Weise ein möglichst genauer Positionswert erfasst bzw. berechnet werden. Ferner kann der Linearmotor auch betrieben werden, wenn beispielsweise eine der Sensoreinheiten für eine der Maßspuren ausfällt, da noch Messwerte der anderen Sensoreinheiten der weiteren Maßspur(en) ausgewertet werden können. Denkbar ist es ferner, dass die Maßspuren auf benachbarten Statormodulen gleich ausgebildet sind. Trotzdem ist in einem solchen Falle eine genaue Positionierung möglich, wenn bestimmt werden kann, auf welchem Statormodul eine Messung erfolgt ist.

Die an der Läufereinrichtung vorgesehenen Sensoreinheiten sind bevorzugt derart ausgebildet sind, dass sie die mehreren Maßspuren abtasten können, wobei sie vorzugsweise mehrere Sensoren umfassen, die einer jeweiligen Maßspur zugeordnet sind. Es kann pro Maßspur ein Sensor vorgesehen sein. Ferner ist es auch denkbar, dass unterschiedlich lange Bereiche einer jeweiligen Maßspur abgetastet werden, ggf. auch in Abhängigkeit davon, wie die Maßspur selbst ausgeführt ist.

Die Läufereinrichtung kann eine Schaltung umfassen zur Ansteuerung des Stromflusses in den Spulen, wobei die Schaltung vorzugsweise dazu eingerichtet ist, in Abhängigkeit der aktuellen Position der Läufereinrichtung und einer gewünschten anzufahrenden Position einen entsprechenden Stromfluss in den Spulen zu erzeugen, um die gewünschte Bewegung der Läufereinrichtung relativ zur Statoreinrichtung zu erzeugen.

In diesem Zusammenhang wird weiter vorgeschlagen, dass die Schaltung dazu eingerichtet ist, die Position oder/und Geschwindigkeit oder/und Beschleunigung der Läufereinrichtung bezogen auf die Statoreinrichtung zu bestimmen, wobei sie vorzugsweise eine Auswertevorrichtung umfasst, die dazu eingerichtet ist positionsabhängige Signale basierend auf Abtastsignalen, die von den Sensoreinheiten erfasst werden, zu erzeugen.

Vorzugsweise ist die Läufereinrichtung mit einer Stromquelle verbunden und weiter vorzugsweise kann sie mit einer Steuereinheit einer übergeordneten Vorrichtung verbunden sein.

Ferner wird vorgeschlagen, dass die Statoreinrichtung mit dem wenigstens einen Statormodul verbundene oder verbindbare Statorabschlusselemente umfasst, welche die von der Läufereinrichtung befahrbare Strecke begrenzen. Vorzugsweise können die Statorabschlusselemente ebenfalls formschlüssig entweder mit dem ersten oder dem zweiten Modulende eines Statormoduls verbunden werden. Die Statorabschlusselemente können eine Art Prellbock für die Läufereinrichtung bilden. Es ist denkbar, dass an den Statorabschlusselementen keine oder nur noch teilweise Permanentmagnete vorhanden sind, so dass die Läufereinrichtung auch bei bestromten Spulen zum Stillstand kommen sollte aufgrund der wirkenden Reibungskräfte und aufgrund der fehlenden Antriebskräfte durch die elektromagnetischen Wechselwirkungen. Denkbar ist auch die Anordnung einer speziellen Maßspur, welche nach ihrem Abtasten zu einem sofortigen Stopp der Läufereinrichtung führt (abschalten des Stromflusses in den Spulen).

Der hier vorgestellte Linearmotor kann bei verschiedensten übergeordneten Vorrichtung (Maschinen) zum Einsatz kommen, bei denen lineare Zustellbewegungen erforderlich sind.

Besonders bevorzugt und Gegenstand der Erfindung ist in diesem Zusammenhang ein Pipettierautomat, umfassend wenigstens einen Linearmotor mit einem der oben genannten Merkmale, wobei der wenigstens eine Linearmotor zur Bewegung einer Pipettiereinrichtung des Pipettierautomaten vorgesehen ist.

Die Erfindung betrifft ferner auch eine Statoreinrichtung eines Linearmotors mit mehreren Permanentmagneten unterschiedlicher Polarisierung und mit wenigstens einer Trägerschiene für eine Läufereinrichtung des Linearmotors, wobei die Läufereinrichtung und die Statoreinrichtung relativ zueinander hin und her beweglich sind entlang einer durch die Trägerschiene festgelegten Fahrrichtung, wobei erfindungsgemäß vorgeschlagen wird, dass die Statoreinrichtung aus wenigstens einem Statormodul gebildet ist mit einem ersten und einem zweiten Modulende, wobei die Modulenden derart ausgeführt sind, dass zwischen einem ersten Modulende eines ersten Statormoduls und einem zweiten Modulende eines zweiten Statormoduls eine formschlüssige Verbindung herstellbar ist, vorzugsweise derart, dass der Abstand der beiden verbundenen Statormodule kleiner oder gleich 1 Millimeter beträgt.

Hierzu wird weiter vorgeschlagen, dass die Statoreinrichtung wenigstens ein weiteres oben im Zusammenhang mit dem Linearmotor beschriebenes Merkmal aufweist, das auf die Statoreinrichtung oder/und das wenigstens eine Statormodul gerichtet ist.

Schließlich betrifft die Erfindung auch eine Läufereinrichtung eines Linearmotors mit wenigstens drei elektrischen Spulen und mit wenigstens einem an einer Trägerschiene einer Statoreinrichtung des Linearmotors abstützbaren Stützmittel, wobei die Läufereinrichtung und die Statoreinrichtung durch Wechselwirkung der Magnetfelder von Permanentmagneten der Statoreinrichtung mit dem Magnetfeld der bedarfsweise mit Strom durchflossenen Spulen relativ zueinander hin und her beweglich sind entlang einer Fahrrichtung, wobei erfindungsgemäß vorgeschlagen wird, dass die Läufereinrichtung derart eingerichtet ist, dass sie mit einer oben beschriebenen Statoreinrichtung koppelbar ist.

Eine solche Läufereinrichtung kann wenigstens ein weiteres auf die Läufereinrichtung bezogenes Merkmal aufweisen, das oben im Zusammenhang mit dem Linearmotor erläutert worden ist.

Nachfolgend wird die Erfindung unter Bezugnahme auf die anliegenden Figuren beispielhaft und nicht einschränkend anhand einer bevorzugten Ausführungsform beschrieben.
- Fig. 1: zeigt in den Teilfiguren a) und b) vereinfachte teilgeschnittene Perspektivdarstellungen einer Ausführungsform eines Linearmotors.
- Fig. 2: in vereinfachter Explosionsdarstellung eine Läufereinrichtung des Linearmotors.
- Fig. 3: zeigt in in perspektivischer Teildarstellung die Statoreinrichtung sowie Teile der Läufereinrichtung.
- Fig. 4: zeigt in den Teilfiguren a) und b) jeweils zwei Statormodule in vereinfachter Perspektivdarstellung, wobei Teilfigur a) eine Darstellung von oben ist und Teilfigur b) eine Ansicht der Unterseiten.
- Fig. 5: zeigt vereinfacht und schematisch eine mögliche Ausführungsform von Maßspuren im Übergangsbereich zwischen zwei Statormodulen und ebenfalls schematisch die Anordnung einer in der Läufereinrichtung vorgesehenen Sensoreinheit samt den möglichen Abtastbereichen.

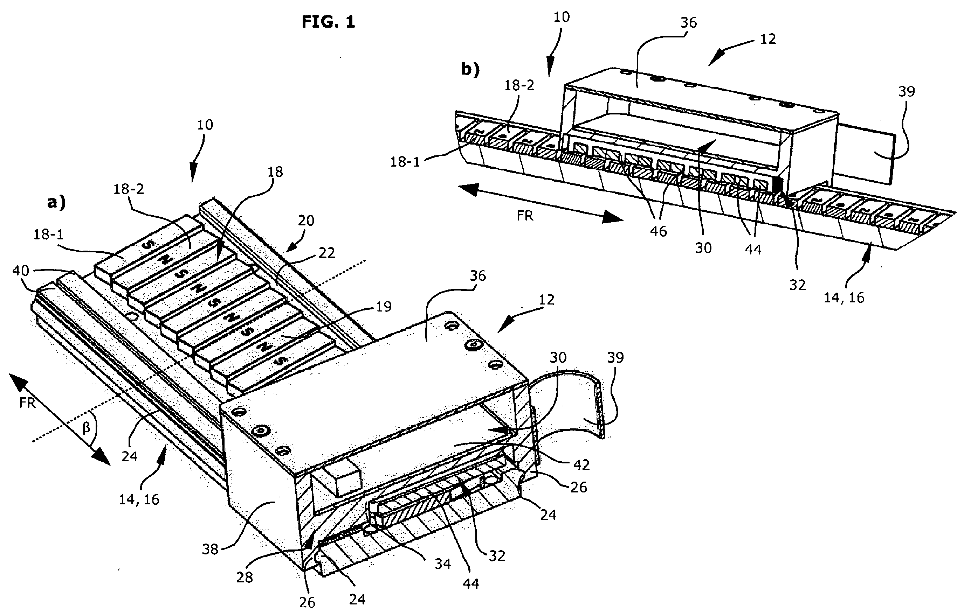

Fig. 1 zeigt in den Teilfiguren a) und b) in vereinfachter und schematischer Perspektivdarstellung Teilschnitte einer Ausführungsform eines Linearmotors 10. Eine Läufereinrichtung 12 ist relativ zu einer Statoreinrichtung 14 in Längsrichtung beweglich. Diese Längsrichtung entspricht in der vorliegenden Anmeldung einer Fahrrichtung FR. In Teilfigur a) ist ein Querschnitt (Schnitt orthogonal zur Fahrrichtung FR) durch die Läufereinrichtung 12 und die Statoreinrichtung 14 bzw. ein zugehöriges Statormodul 16 gezeigt. In Teilfigur b) ist ein Längsschnitt (parallel zur Fahrrichtung FR) durch die Läufereinrichtung 12 und die Statoreinrichtung 14 bzw. ein zugehöriges Statormodul 16 dargestellt.

Die Statoreinrichtung 14 umfasst mehrere Permanentmagnete 18 mit wechselnder Polarität, wobei Permanentmagnete mit dem Nordpol zur Läufereinrichtung 12 hin mit dem Bezugszeichen 18-1 und Permanentmagnete mit dem Südpol zur Läufereinrichtung 12 hin mit dem Bezugszeichen 18-2 versehen sind. Die Permanentmagnete 18 sind zwischen seitlichen Rändern 20 der Statoreinrichtung 14 in einer Vertiefung 22 eingelassen und sind vorzugsweise flachstabartig ausgeführt. Die Längsseiten der 19 der Permanentmagnete 18 sind zur Fahrrichtung FR bzw. zu den seitlichen Rändern 20 geneigt angeordnet, so dass zwischen diesen gedachten Linien ein Winkel β vorliegt, der ungleich 90° ist, wobei die Abweichung von einem rechten Winkel vorzugsweise etwa 1 bis 10° beträgt.

Entlang der seitlichen Rändern 20 sind Gleitabschnitte 24 ausgebildet, welche die Funktion von Trägerschienen für die Läufereinrichtung 12 übernehmen. Die Gleitabschnitte bzw. Trägerschienen 24 sind in der vorliegenden Ausführungsform als halbkreisförmige nach außen hin gewölbte (konvexe) Profile ausgebildet. Diese Profile 24 stehen in Eingriff mit komplementär (konkav) ausgebildeten Gleitprofilen 26 (Stützmittel) an der Läufereinrichtung 12. Die hier dargestellte Ausführung der Gleitabschnitte 24 an der Statoreinrichtung 12 bzw. der Gleitprofile 26 an der Läufereinrichtung 12 ist zwar bevorzugt, stellt aber nur ein Beispiel einer Ausgestaltung dar, um die Relativbewegung, speziell das relative Gleiten von Läufereinrichtung 12 und Statoreinrichtung 14 zueinander zu ermöglichen. Denkbar sind beispielsweise auch eckige Profile oder bewegliche Lagermittel, wie etwa Wälzlager mit Rollen oder Kugeln, speziell in Form von Umlaufwälzlagern oder dergleichen.

Die Läufereinrichtung 12 umfasst einen gehäuseartigen Grundkörper 28 mit einer oberen Gehäuseaufnahme 30 und einer unteren Gehäuseaufnahme 32, die durch einen Gehäuseboden 34 voneinander getrennt sind. Die obere Gehäuseaufnahme 30 kann durch einen Gehäusedeckel 36 abgedeckt und verschlossen werden. Die untere Gehäuseaufnahme 32 wird seitlich von Wandabschnitten 38 begrenzt, in denen die Gleitprofile 26 ausgebildet sind. Um die Läufereinrichtung 12 mit elektrischer Energie versorgen zu können und um ggf. eine drahtgebundene Verbindung zu einer Steuereinheit einer übergeordneten Vorrichtung herstellen zu können, ist an der Läufereinrichtung 12 ein Kabelband 39 angeschlossen.

Entlang der Permanentmagnete 18 sind in Fahrrichtung FR beispielhaft zwei Maßspuren 40 an der Statoreinrichtung 14 vorgesehen. Diese Maßspuren dienen zur Bestimmung der Position der Läufereinrichtung 12 relativ zur Statoreinrichtung 14 sowie zur Bestimmung von Beschleunigung und Geschwindigkeit der Läufereinrichtung 12 relativ zur Statoreinrichtung 14. Ein an den Maßspuren mittels Sensoren abtastbares Muster kann durch unterschiedliche Farbgebung (z.B. Abwechseln von schwarzen und weissen strichartigen Bereichen) oder/und durch Ausgestaltung eines Profils mit Erhebungen und Vertiefungen gebildet sein.

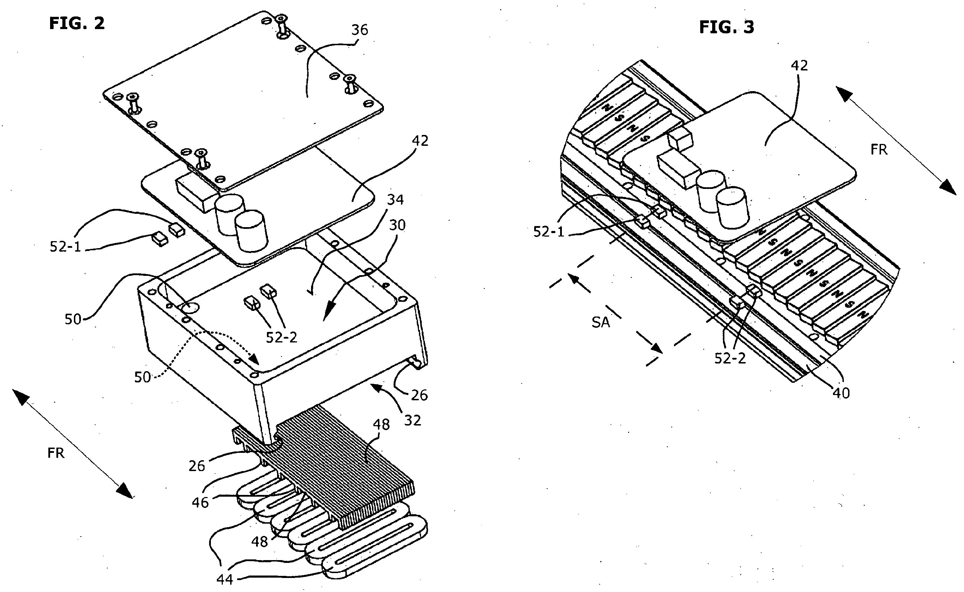

Der Aufbau der Läufereinrichtung 12 wird nachfolgend unter Bezugnahme auf die schematische Explosionsdarstellung in der Fig. 2 sowie die Teildarstellung der Fig. 3 mit Statoreinrichtung 14 beschrieben. Korrespondierende Bauteile der Läufereinrichtung 12 sind auch in Fig. 1 mit den entsprechenden Bezugszeichen versehen ohne dass unter Bezugnahme auf die Fig. 1 nochmals beschrieben werden.

In der oberen Gehäuseaufnahme 30 ist eine Schaltkreisplatine 42 aufgenommen, welche vorzugsweise eine Schaltung umfasst zur Ansteuerung des Stromflusses durch Spulen 44 der Läufereinrichtung 12. Die Schaltung ist vorzugsweise dazu eingerichtet, in Abhängigkeit einer aktuellen Position der Läufereinrichtung 12 und einer gewünschten Position einen entsprechenden Stromfluss in den Spulen 44 zu erzeugen, um die gewünschte Bewegung der Läufereinrichtung 12 relativ zur Statoreinrichtung 14 zu erzeugen. Auf der Schaltkreisplatine 42 sind alle für die gewünschte Steuerung/Regelung der Läufereinrichtung erforderlichen Bauteile, wie etwa Prozessor, Speichermodul und dergleichen angeordnet.

Die Spulen 44, von denen es mindestens drei gibt, sind um jeweilige Rückschlusselemente 46 gewickelt, wobei diese Rückschlusselemente 46 den Permanentmagneten 18 zugewandt sind, also bezogen auf die Anordnung der Läufereinrichtung 12 an der Statoreinrichtung 14 nach unten weisen. Die Rückschlusselemente 46 erstrecken sich durch die Spulen 44 hindurch und sind über stegartige Verbindungen 48, die oberhalb der Spulen 44 angeordnet sind, miteinander verbunden. Die stegartigen Verbindungen 48 und die Rückschlusselemente 46 können einstückig ausgebildet sein, beispielsweise als sogenanntes Rückschlussblech.

Im Boden 34 des Grundkörpers 28 sind Öffnungen 50 vorgesehen. Diese Öffnungen 50, von denen nur eine sichtbar ist in Fig. 2, sind so ausgestaltet, dass sie im zusammengebauten Zustand des Linearmotors oberhalb der Maßspuren 40 angeordnet sind. Durch die Öffnungen 50 hindurch können jeweilige Sensoren 52-1, 52-2, die mit der Platine 42 in Verbindung stehen, die Maßspuren abtasten, um entsprechende Messsignale zu erzeugen, die mittels der Schaltung ausgewertet werden können, um Positions- oder/und Geschwindigkeits- oder/und Beschleunigungswerte der Läufereinrichtung 12 zu bestimmen. Pro Maßspur 40 sind jeweils zwei Sensoren 52-1 und 52-2 vorgesehen, die in Fahrrichtung FR in einem bestimmten Abstand SA voneinander angeordnet sind.

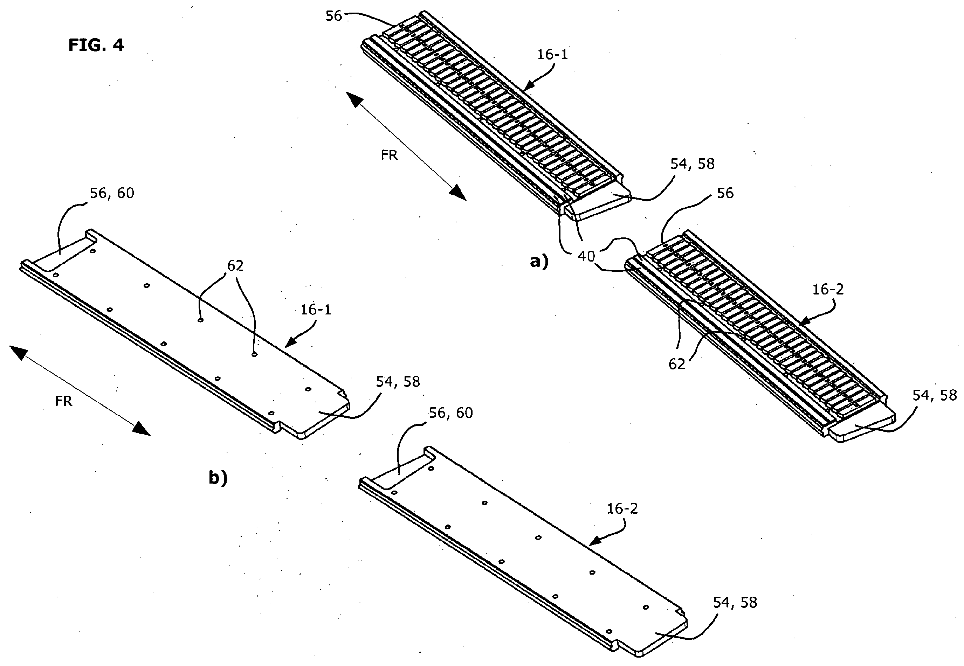

Der Abstand SA der jeweiligen Sensorenpaare 52-1 und 52-2 ist dabei so gewählt, dass die Sensoren 52-1 und 52-2 mit ausreichender Sicherheit Maßspuren auf in Fahrrichtung FR benachbarten und miteinander verbundenen Statormodulen 16-1 und 16-2, wie dies in Fig. 4 a) und b) dargestellt ist, zu erfassen, wenn sich die Läufereinrichtung an einem Übergang zwischen zwei Statormodulen 16-1 und 16-2 befindet. Die Statoreinrichtung 14 ist bevorzugt aus mehreren Statormodulen 16-1 und 16-2 aufgebaut, wobei die Statormodule 16-1 und 16-2 jeweils ein erstes Modulende 54 und ein zweites Modulende 56 umfassen. Diese Modulenden 54 und 56 sind derart ausgeführt, dass zwischen einem Ende (hier erstes Ende 54) eines ersten Statormoduls 16-1 und einem komplementären Ende (hier zweites Ende 56) eines zweiten Statormoduls 16-2 eine formschlüssige Verbindung herstellbar ist. Wie aus den Figuren 4 a) und b) ersichtlich weist das jeweils erste Modulende 54 hierzu einen in Fahrrichtung FR vorstehenden Verbindungsabschnitt 58 auf, der in entsprechende Verbindungsaufnahmen 60 an den jeweiligen zweiten Enden 56 eingeführt werden kann. Die Verbindungsabschnitte 58 und die Verbindungsaufnahmen 60 sind dabei bezogen auf einen zusammengebauten Zustand des Linearmotors unterhalb der Permanentmagnete 18 angeordnet, so dass sich zur Oberseite hin eine durchgehende Abfolge von Permanentmagneten 18 ergibt. Die Verbindungsabschnitte 58 und die komplementären Verbindungsaufnahmen 60 sind hier beispielhaft trapezförmig ausgebildet. Bevorzugt sind die Verbindungsabschnitte 58 und Verbindungsaufnahmen 60 so ausgeführt, dass eine Art Zwangsausrichtung bzw. -zentrierung der aneinander gefügten Statormodule 16-1 und 16-2 ermöglicht wird. An den Statormodulen 16-1 und 16-2 sind ferner Bohrungen 62 vorgesehen, die dafür vorgesehen sind, die Statormodule mit einem Bauteil einer zugehörigen Vorrichtung (Maschine), an welcher der Linearmotor zum Einsatz kommen soll, verbinden zu können, vorzugsweise mittels Schraubverbindung oder dergleichen. Die formschlüssige Verbindung zwischen zwei benachbarten Statormodulen 16-1 und 16-2 ermöglicht im zusammengebauten Zustand einen möglichst geringen Abstand zwischen den beiden Statormodulen 16-1 und 16-2, so dass zwischen den beiden Statormodulen 16-1 und 16-2 nur eine geringe Lücke aufgrund ihres aneinander Stoßens entsteht, wie dies beispielsweise bei einem Schienenstoß üblich ist.

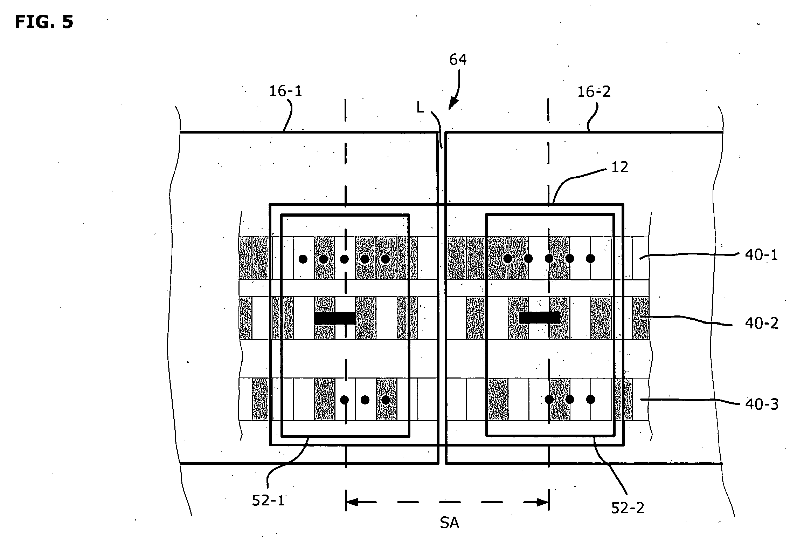

Fig. 5 zeigt in stark vereinfachter und schematischer Weise den Übergangsbereich 64 zwischen zwei miteinander verbundenen Statormodulen 16-1 und 16-2. Rein beispielhaft umfassen die Statormodule 16-1 und 16-2 hier jeweils drei Maßspuren 40-1, 40-2 und 40-3. Zwischen den benachbarten Statormodulen 16-1 und 16-2 besteht konstruktions- oder/und produktionsbedingt eine Lücke L, die in der Regel in der Größenordnung von wenigen Millimetern oder und im Submillimeterbereich liegt. Diese Lücke zwischen zwei benachbarten Statormodulen ist nicht immer gleich groß. Beim modularen Aufbau einer Statoreinrichtung 16 führt diese Lücke L dazu, dass auch eine im Wesentlichen gleichgroße Lücke zwischen den Maßspuren 40-1, 40-2 und 40-3 entsteht. Bei einer Aneinanderreihung von mehreren Statormodulen 16-1 und 16-2 ergibt sich also eine tatsächliche Gesamtlänge der Statoreinrichtung, die um die Größenordnung der summierten Lücken L von einer theoretischen Gesamtlänge abweicht (länger ist). Damit dieser Fehler aufgrund der Lückenbildung bei der Positionsbestimmung berücksichtigt werden kann, sind die Sensoreinheiten 52-1 und 52-2 im bereits erwähnten Abstand SA (vgl. Fig. 2 und 3) voneinander angeordnet, so dass sich beim Überfahren eines Übergangsbereichs 64 (einer Lücke L) zwischen zwei Statormodulen 16-1 und 16-2 die Situation ergibt, dass eine Sensoreinheit 52-1 noch die Maßspuren auf dem ersten Statormodul 16-1 abtastet, während die andere Sensoreinheit 52-2 bereits die Maßspuren auf dem benachbarten zweiten Statormodul 16-2 abtastet. Mittels der Sensoreinheit 52-2 kann dann die Verschiebung der Maßspuren um den Betrag der Lücke L festgestellt werden aufgrund von abgetasteten Mustern, welche diese Verschiebung repräsentieren, verglichen mit einem durchgehenden (lückenlosen) Muster, das als Sollwert dienen kann. Die durch die zweite Sensoreinheit 52-2 ermittelte Abweichung von einem Sollmuster kann dann dazu verwendet werden, die Positionsbestimmung entlang des Statormoduls 16-2 unter Berücksichtigung des Fehlers L aufgrund der Lücke auszuführen. Die Ermittlung der Position unter Verwendung von mehr als einer Maßspur ermöglicht dabei eine vorteilhafte Redundanz zur Ermittlung und Ausgleichung von erfassten bzw. berechneten Fehlern/Positionen. Im vorliegenden Beispiel der Fig. 5 sind drei Maßspuren dargestellt, wobei dies rein beispielhaft ist. Die Erfassung der Größe einer Lücke L und deren rechnerische Berücksichtigung bei der Positionsbestimmung kann auch mit nur einer Maßspur erfolgen. Dass der Linearmotor auch mit zwei Maßspuren möglich ist, kann den Fig. 1 bis 4 entnommen werden. Die in Fig. 5 dargestellten Maßspuren 40-1, 40-2 und 40-3 könnten beispielsweise wie folgt ausgeführt sein: eine Absolutspur 40-1 zur Bestimmung der Absolutposition entlang eines Statormoduls, eine Inkrementalspur 40-2 zum Erfassen und Zählen von Inkrementen entlang eines Statormoduls und eine Modulspur 40-3, welche das Statormodul eindeutig identifiziert und für jedes Statormodul unterschiedlich ausgebildet ist. Die Ausgestaltung der Maßspuren ist hier rein beispielhaft als Abfolge von grauen und weissen gleichgroßen Bereichen dargestellt. Diese Muster können aber durch Veränderung der unterschiedlichen Farbbereiche in ihrer Größe, insbesondere Ausdehnung in Fahrrichtung FR variieren. Die Maßspuren 40, 40-1, 40-2, 40-3 und das zugehörige Abtastsystem (Sensoren bzw. Sensoreinheiten 52-1 und 52-2, Schaltung auf Platine 42) der Läufereinrichtung 12 sind also in Kombination so ausgestaltet, dass über die Lücken L hinweg eine fehlerfreie Messung und Positionsbestimmung möglich sind. Der modulare Aufbau der Statoreinrichtung 16 aus mehreren Statormodulen 16-1 und 16-2 ermöglicht eine große Flexibilität, wobei durch die Aneinanderreihung von mehreren Statormodulen entstehenden systematische Längenfehler aufgrund von Lücken L durch das Abtastsystem mit den voneinander in Fahrrichtung im Abstand angeordneten Sensoren 52-1 und 52-2 berücksichtigt und kompensiert werden können.

Der hier vorgestellte Linearmotor mit modularem Aufbau der Statormodule sowie einem an den modularen Aufbau angepassten Abtastsystem für die Maßspuren kann bei verschiedensten übergeordnete Vorrichtungen eingesetzt werden, bei denen eine Linearbewegung präzise ausgeführt werden muss. Der modulare Statoraufbau ermöglicht dabei die Anpassung des Linearmotors an größere und kleiner Vorrichtungen. Ferner können Statormodule auch wieder verwendet werden oder mit weiteren Statormodulen kombiniert werden, wenn der Linearmotor vergrößert werden soll. Insgesamt ergibt sich ein flexibel einsetzbarer Linearmotor für verschiedenste Anwendungen. Bevorzugt wird der vorgestellte Linearmotor bei einem Pipettierautomaten eingesetzt zur Bewegung einer Pipettiervorrichtung mit mehreren Pipettierspitzen, die präzise zu feststehenden Probenbehältern bewegt werden müssen.

## Patentansprüche

1. Linearmotor, umfassend:
- eine Statoreinrichtung (14), die aus wenigstens einem Statormodul (16-1, 16-2) mit mehreren Permanentmagneten (18, 18-1, 18-2) unterschiedlicher Polarisierung und mit wenigstens einer Trägerschiene (24) gebildet ist, und
- wenigstens eine Läufereinrichtung (12) mit wenigstens drei elektrischen Spulen (44) und mit wenigstens einem an der Trägerschiene (24) des Statormoduls (16-1. 16-2) abstützbaren oder abgestützten Stützmittel (26),
wobei die Läufereinrichtung (12) und die Statoreinrichtung (14) durch Wechselwirkung der Magnetfelder der Permanentmagneten (18, 18-1, 18-2) des Statormoduls (16-1, 16-2) mit den Magnetfeldern der bedarfsweise mit Strom durchflossenen Spulen (44) relativ zueinander hin und her beweglich sind entlang einer durch die Trägerschiene (24) festgelegten Fahrrichtung (FR),
und wobei am Statormodul (16-1, 16-2) wenigstens eine durch eine Sensoreinheit (52-1, 52-2) der Läufereinrichtung (12) abtastbare Maßspur (40. 40-1, 40-2, 40-3) vorgesehen ist, die im Wesentlichen parallel zur Fahrrichtung (FR) verläuft,
**dadurch gekennzeichnet, dass** das Statormodul (16-1, 16-2) derart ausgeführt ist, dass eine Statoreinrichtung (14) mit zwei oder mehr nacheinander angeordneten Statormodulen (16-1, 16-2) gebildet werden kann, wobei auf benachbarten Statormodulen die Maßspur gleich ausgebildet ist, und dass an der Läufereinrichtung (12) wenigstens zwei die Maßspur (40, 40-1, 40-2, 40-3) abtastende Sensoreinheiten (52-1, 52-2) vorgesehen sind, die in Fahrrichtung (FR) der Läufereinrichtung (12) voneinander in einem Abstand (SA) angeordnet sind, derart, dass im Falle einer Anordnung der Läufereinrichtung (12) an einer Verbindungsstelle (64, L) zwischen zwei Statormodulen (16-1, 16-2) die jeweiligen Maßspuren (40, 40-1, 40-2, 40-3) auf den benachbarten Statormodulen durch jeweils eine der beiden Sensoreinheiten (52-1. 52-2) abtastbar sind.

2. Linearmotor nach Anspruch 1, **dadurch gekennzeichnet, dass** das Statormodul (16-1, 16-2) plattenartig ausgeführt ist mit zwei sich zwischen den beiden Modulenden (54, 56) erstreckenden Längsseiten (20), wobei vorzugsweise das Statormodul (16-1, 16-2) eine in Querrichtung zwischen den Längsseiten (20) ausgebildete Vertiefung (22) aufweist, in welcher die Permanentmagnete (18, 18-1, 18-2) angeordnet sind.

3. Linearmotor nach Anspruch 2, **dadurch gekennzeichnet, dass** die wenigstens eine Maßspur (40, 40-1, 40-2, 40-3) in Querrichtung zwischen einer der Längsseiten (22) und den Permanentmagneten (18, 18-1, 18-2) angeordnet ist.

4. Linearmotor nach Anspruch 2 oder 3, **dadurch gekennzeichnet, dass** an den Längsseiten (22) eine jeweilige Trägerschiene (24) vorgesehen ist, vorzugsweise in Form eines nach außen gewölbten Profils, das insbesondere seitlich vom Statormodul (16-1, 16-2) vorsteht.

5. Linearmotor nach einem der vorhergehenden Ansprüche, **dadurch gekennzeichnet, dass** an der Läufereinrichtung (12) ein magnetisches Rückschlussblech (46, 48) vorgesehen ist, an welchem von einer jeweiligen Spule (44) umwickelte Rückschlusselemente (46) ausgebildet sind, wobei vorzugsweise die Rückschlusselemente (46) den Permanentmagneten (18, 18-1, 18-2) zugewandt sind, insbesondere von der Läufereinrichtung (12) bezogen auf eine betriebsmäßige Anordnung an der Statoreinrichtung (14) nach unten gerichtet sind, und vorzugsweise nach unten über die Spulen (44) vorstehen.

6. Linearmotor nach einem der vorhergehenden Ansprüche, **dadurch gekennzeichnet, dass** das wenigstens eine Statormodul (16-1, 16-2) ein erstes und ein zweites Modulende (54, 56) aufweist, wobei die Modulenden (54, 56) derart ausgeführt sind, dass zwischen einem ersten Modulende (54) eines ersten Statormoduls (16-1) und einem zweiten Modulende (56) eines zweiten Statormoduls (16-2) eine formschlüssige Verbindung herstellbar oder hergestellt ist.

7. Linearmotor nach Anspruch 6, **dadurch gekennzeichnet, dass** das erste Modulende (54) des Statormoduls einen in Längsrichtung vorstehenden Verbindungsabschnitt (58) aufweist und dass das zweite Modulende (56) eine in Längsrichtung ausgebildete Verbindungsaufnahme (60) aufweist, derart, dass im verbundenen Zustand von zwei benachbarten Statormodulen (16-1, 16-2) die Formschlussverbindung zwischen dem Verbindungsabschnitt (58) des ersten Statormoduls (16-1) und der Verbindungsaufnahme (60) des zweiten Statormoduls (16-2) herstellbar bzw. hergestellt ist.

8. Linearmotor nach einem der vorhergehenden Ansprüche, **dadurch gekennzeichnet, dass** an dem wenigstens einen Statormodul (16-1, 16-2) mehrere Maßspuren (40, 40-1, 40-2, 40-3) vorgesehen sind, vorzugsweise eine Maßspur zur Abtastung einer absoluten Position auf dem betreffenden Statormodul, vorzugsweise eine Maßspur zur Abtastung von vorbestimmten Inkrementen entlang des Statormoduls und vorzugsweise eine das Statormodul innerhalb der Statoreinheit identifizierende Maßspur.

9. Linearmotor nach Anspruch 8, **dadurch gekennzeichnet, dass** die an der Läufereinrichtung (12) vorgesehenen Sensoreinheiten (52-1, 52-2) derart ausgebildet sind, dass sie die mehreren Maßspuren (40, 40-1, 40-2, 40-3) abtasten können, wobei sie vorzugsweise mehrere Sensoren umfassen, die einer jeweiligen Maßspur (40, 40-1, 40-2, 40-3) zugeordnet sind.

10. Linearmotor nach einem der vorhergehenden Ansprüche, **dadurch gekennzeichnet, dass** die Läufereinrichtung (12) eine Schaltung umfasst zur Ansteuerung des Stromflusses in den Spulen (44), wobei die Schaltung vorzugsweise dazu eingerichtet ist, in Abhängigkeit der aktuellen Position der Läufereinrichtung (12) und einer gewünschten anzufahrenden Position einen entsprechenden Stromfluss in den Spulen (44) zu erzeugen, um die gewünschte Bewegung der Läufereinrichtung (12) relativ zur Statoreinrichtung (14) zu erzeugen.

11. Linearmotor nach Anspruch 10, **dadurch gekennzeichnet, dass** die Schaltung dazu eingerichtet ist, die Position oder/und Geschwindigkeit oder/und Beschleunigung der Läufereinrichtung (12) bezogen auf die Statoreinrichtung (14) zu bestimmen, wobei sie vorzugsweise eine Auswertevorrichtung umfasst, die dazu eingerichtet ist positionsabhängige Signale basierend auf Abtastsignalen, die von den Sensoreinheiten (52-1, 52-2) erfasst werden, zu erzeugen.

12. Linearmotor nach einem der vorhergehenden Ansprüche, **dadurch gekennzeichnet, dass** die Läufereinrichtung mit einer Stromquelle und vorzugsweise mit einer Steuereinheit einer übergeordneten Vorrichtung verbunden ist.

13. Pipettierautomat, umfassend wenigstens einen Linearmotor nach einem der vorhergehenden Ansprüche, wobei der wenigstens eine Linearmotor zur Bewegung einer Pipettiereinrichtung des Pipettierautomaten vorgesehen ist.

14. Statoreinrichtung eines Linearmotors (10) mit mehreren Permanentmagneten (18, 18-1, 18-2) unterschiedlicher Polarisierung und mit wenigstens einer Trägerschiene (24) für eine Läufereinrichtung (12) des Linearmotors (10), wobei die Läufereinrichtung (12) und die Statoreinrichtung (14) relativ zueinander hin und her beweglich sind entlang einer durch die Trägerschiene (24) festgelegten Fahrrichtung (FR),
**dadurch gekennzeichnet, dass** die Statoreinrichtung (14) aus wenigstens einem Statormodul (16-1, 16-2) gebildet ist mit einem ersten und einem zweiten Modulende (54, 56), wobei die Modulenden (54, 56) derart ausgeführt sind, dass zwischen einem ersten Modulende (54) eines ersten Statormoduls (16-1) und einem zweiten Modulende (56) eines zweiten Statormoduls (16-2) eine formschlüssige Verbindung herstellbar ist, vorzugsweise derart, dass der Abstand (L) der beiden verbundenen Statormodule (16-1, 16-2) weniger als 1 Millimeter beträgt, wobei am Statormodul (16-1, 16-2) wenigstens eine durch eine Sensoreinheit (52-1, 52-2) der Läufereinrichtung (12) abtastbare Maßspur (40, 40-1, 40-2, 40-3) vorgesehen ist, die im Wesentlichen parallel zur Fahrrichtung (FR) verläuft und wobei auf benachbarten Statormodulen (16-1, 16-2) die Maßspur gleich ausgebildet ist.

15. Läufereinrichtung eines Linearmotors (10) mit wenigstens drei elektrischen Spulen (44) und mit wenigstens einem an einer Trägerschiene (24) einer Statoreinrichtung (14) des Linearmotors (10) abstützbaren Stützmittel (26), wobei die Läufereinrichtung (12) und die Statoreinrichtung (14) durch Wechselwirkung der Magnetfelder von Permanentmagneten (18, 18-1, 18-2) der Statoreinrichtung (14) mit dem Magnetfeld der bedarfsweise mit Strom durchflossenen Spulen (44) relativ zueinander hin und her beweglich sind entlang einer Fahrrichtung (FR),
**dadurch gekennzeichnet, dass** die Läufereinrichtung (12) derart eingerichtet ist, dass sie mit einer Statoreinrichtung (14) gemäß Anspruch 14 koppelbar ist und dass an der Läufereinrichtung (12) wenigstens zwei Sensoreinheiten (52-1, 52-2) vorgesehen sind, die in Fahrrichtung (FR) der Läufereinrichtung (12) voneinander in einem Abstand (SA) angeordnet sind, derart, dass im Falle einer Anordnung der Läufereinrichtung (12) an einer Verbindungsstelle (64, L) zwischen zwei Statormodulen (16-1, 16-2) die jeweiligen gleich ausgebildeten Maßspuren (40, 40-1, 40-2, 40-3) auf den benachbarten Statormodulen durch jeweils eine der beiden Sensoreinheiten (52-1, 52-2) abtastbar sind.

## Claims

1. Linear motor, comprising:
- a stator device (14) which is formed from at least one stator module (16-1, 16-2) with a plurality of permanent magnets (18, 18-1, 18-2) of different polarity and with at least one carrier rail (24), and
- at least one rotor device (12) with at least three electrical coils (44) and with at least one supporting means (26) which can be or which is supported on the carrier rail (24) of the stator module (16-1, 16-2),
wherein the rotor device (12) and the stator device (14) are movable to and fro relative to each other along a movement direction (FR) defined by the carrier rail (24) by interaction of the magnetic fields of the permanent magnets (18, 18-1, 18-2) of the stator module (16-1, 16-2) with the magnetic fields of the coils (44) through which current flows if required,
and wherein on the stator module (16-1, 16-2) at least one measurement track (40, 40-1, 40-2, 40-3) scannable by a sensor unit (52-1, 52-2) of the rotor device (12) is provided, which runs substantially parallel to the movement direction (FR),
**characterized in that** the stator module (16-1, 16-2) is configured such that a stator device (14) with two or more consecutively arranged stator modules (16-1, 16-2) can be formed, wherein the measurement track is identically formed on adjacent stator modules, and that on the rotor device (12) at least two sensor units (52-1, 52-2) scanning the measurement track (40, 40-1, 40-2, 40-3) are provided, which are arranged along the movement direction (FR) of the rotor device (12) in a distance (SA) such that if the rotor device (12) is arranged on a connection point (64, L) between two stator modules (16-1, 16-2) the respective measurement tracks (40, 40-1, 40-2, 40-3) on the adjacent stator modules are scannable by one of the two sensor units (52-1, 52-2), respectively.

2. Linear motor according to claim 1, **characterized in that** the stator module (16-1, 16-2) is formed plate-like with two longitudinal sides (20) which extend between the two module endings (54, 56), wherein the stator module (16-1, 16-2) preferably comprises a recess (22) formed in a traverse direction between the longitudinal sides (20) in which the permanent magnets (18, 18-1, 18-2) are arranged.

3. Linear motor according to claim 2, **characterized in that** the at least one measurement track (40, 40-1, 40-2, 40-3) is arranged in a traverse direction between one of the longitudinal sides (22) and the permanent magnets (18, 18-1, 18-2).

4. Linear motor according to claim 2 or 3, **characterized in that** on the longitudinal sides (22) a respective carrier rail (24) is provided, preferably in form of a convex profile, which in particular protrudes from the side of the stator module (16-1. 16-2).

5. Linear motor according to one of the preceding claims, **characterized in that** on the rotor device (12) a magnetic return metal sheet (46, 48) is provided on which return elements (46) wrapped by a corresponding coil (44) are formed, wherein the return elements (46) are preferably facing the permanent magnets (18, 18-1, 18-2), in particular are directed downwards from the rotor device (12) with respect to an arrangement on the stator device (14) under normal operation conditions, and preferably protrude downwards over the coils (44).

6. Linear motor according to one of the preceding claims, **characterized in that** the at least one stator module (16-1. 16-2) comprises a first and a second module ending (54, 56), wherein the module endings (54, 56) are configured such that between a first module ending (54) of a first stator module (16-1) and a second module ending (56) of a second stator module (16-2) a form-closed connection can be or is established.

7. Linear motor according to claim 6, **characterized in that** the first module ending (54) of the stator module comprises a connection section (58) protruding along a longitudinal direction and that the second module ending (56) comprises a connection recess (60) formed in the longitudinal direction, such that in a connected state of two adjacent stator modules (16-1, 16-2) the form-closed connection between the connection section (58) of the first stator module (16-1) and the connection recess (60) of the second stator module (16-1) can be or is established.

8. Linear motor according to one of the preceding claims, **characterized in that** on the at least one stator module (16-1, 16-2) a plurality of measurement tracks (40, 40-1, 40-2, 40-3) are provided, preferably one measurement track for scanning an absolute position on the concerned stator module, preferably one measurement track for scanning of predetermined increments along the stator module and preferably one measurement track identifying the stator module within the stator device.

9. Linear motor according to claim 8, **characterized in that** the sensor units (52-1, 52-2) provided on the rotor device (12) are formed such that they are able to scan the plurality of measurement tracks (40, 40-1, 40-2, 40-3), wherein they preferably comprise a plurality of sensors which are each assigned to a respective measurement track (40, 40-1, 40-2, 40-3).

10. Linear motor according to one of the preceding claims, **characterized in that** the rotor device (12) comprises a circuit for controlling the current flow in the coils (44), wherein the circuit preferably is configured to generate in dependence of the actual position of the rotor device (12) and a desired position to be reached a corresponding current flow in the coils (44) in order to generate the desired movement of the rotor device (12) with respect to the stator device (14).

11. Linear motor according to claim 10, **characterized in that** the circuit is configured to determine the position and/or the speed and/or the acceleration of the rotor device (12) with respect to the stator device (14), wherein the circuit preferably comprises an evaluation device configured to generate position dependent signals based on scanning signals which are captured from the sensor units (52-1, 52-2).

12. Linear motor according to one of the preceding claims, **characterized in that** the rotor device is connected with a current source and preferably with a control unit of a superordinate device.

13. Pipetting apparatus, comprising at least one linear motor according to one of the preceding claims, wherein the at least one linear motor is provided for moving a pipetting device of the pipetting apparatus.

14. Stator device of a linear motor (10) with a plurality of permanent magnets (18, 18-1, 18-2) of different polarity and with at least one carrier rail (24) for a rotor device (12) of the linear motor (10), wherein the rotor device (12) and the stator device (14) are movable to and fro relative to each other along a movement direction (FR) defined by the carrier rail (24),
**characterized in that** the stator device (14) is formed from at least one stator module (16-1, 16-2) with a first and a second module ending (54, 56), wherein the module endings (54, 56) are configured such that between a first module ending (54) of a first stator module (16-1) and a second module ending (56) of a second stator module (16-2) a form-closed connection ca be established, preferably such that the distance (L) of the two connected stator modules (16-1, 16-2) is less than 1 millimeter, wherein on the stator module (16-1, 16-2) at least one measurement track (40, 40-1, 40-2, 40-3) scannable by a sensor unit (52-1, 52-2) of the rotor device (12) is provided, which runs substantially parallel to the movement direction (FR) and wherein the measurement track is identically formed on adjacent stator modules (16-1, 16-2).

15. Rotor device of a linear motor (10) with at least three electrical coils (44) and with at least one supporting means (26) which is supportable on a carrier rail (24) of a stator device (14) of the linear motor (10), wherein the rotor device (12) and the stator device (14) are movable to and fro relative to each other along a movement direction (FR) by interaction of the magnetic fields of permanent magnets (18, 18-1, 18-2) of the stator device (14) with the magnet field of the coils (44) through which current flows if required,
**characterized in that** the rotor device (12) is configured such that it can be linked with a stator device (14) according to claim 14 and that on the rotor device (12) at least two sensor units (52-1, 52-2) are provided, which are arranged along the movement direction (FR) of the rotor device (12) in a distance (SA) such that if the rotor device (12) is arranged on a connection point (64, L) between two stator modules (16-1, 16-2) the respective identical formed measurement tracks (40, 40-1, 40-2, 40-3) of the adjacent stator modules (16-1, 16-2) are scannable by one of the two sensor units (52-1, 52-2), respectively.

## Revendications

1. Moteur linéaire comprenant :
- un dispositif formant stator (14) qui est formé à partir d'au moins un module de stator (16-1, 16-2) avec plusieurs aimants permanents (18, 18-1, 18-2) de polarisations différentes et avec au moins un rail de support (24), et
- au moins un dispositif formant rotor (12) avec au moins trois bobines électriques (44) et au moins un moyen de support (26) apte à s'appuyer ou appuyé contre le rail de support (24) du module de stator (16-1, 16-2),
étant précisé que le dispositif formant rotor (12) et le dispositif formant stator (14) sont mobiles suivant un mouvement de va-et-vient l'un par rapport à l'autre le long d'un sens de déplacement (FR) fixé par le rail de support (24), grâce à l'interaction des champs magnétiques des aimants permanents (18, 18-1, 18-2) du module de stator (16-1, 16-2) avec les champs magnétiques des bobines (44) traversées au besoin par le courant,
et qu'il est prévu sur le module de stator (16-1, 16-2) au moins une piste de mesure (40, 40-1, 40-2, 40-3) qui est apte à être balayée par un ensemble capteur (52-1, 52-2) du dispositif formant rotor (12) et qui s'étend globalement parallèlement au sens de déplacement (FR),
**caractérisé en ce que** le module de stator (16-1, 16-2) est conçu de telle sorte qu'un dispositif formant stator (14) puisse être formé avec deux modules de stator (16-1, 16-2), ou plus, disposés successivement, étant précisé que sur des modules de stator voisins, la piste de mesure est identique, et **en ce qu'**il est prévu sur le dispositif formant rotor (12) au moins deux ensembles capteurs (52-1, 52-2) qui balaient la piste de mesure (40, 40-1, 40-2, 40-3) et qui sont disposés avec un écartement (SA) dans le sens de déplacement (FR) du dispositif formant rotor (12), de telle sorte que dans le cas où le dispositif formant rotor (12) est disposé à une jonction (64, L) entre deux modules de stator (16-1, 16-2), chacune des pistes de mesure (40, 40-1, 40-2, 40-3) prévues sur les modules de stator voisins puisse être balayée par l'un des deux ensembles capteurs (52-1, 52-2).

2. Moteur linéaire selon la revendication 1, **caractérisé en ce que** le module de stator (16-1, 16-2) a la forme d'une plaque, avec deux côtés longitudinaux (20) qui s'étendent entre les deux extrémités de modules (54, 56), étant précisé que le module de stator (16-1, 16-2) présente de préférence un creux (22), formé dans le sens transversal entre les côtés longitudinaux (20), dans lequel les aimants permanents (18, 18-1, 18-2).

3. Moteur linéaire selon la revendication 2, **caractérisé en ce que** la ou les pistes de mesure (40, 40-1, 40-2, 40-3) sont disposées dans le sens transversal entre l'un des côtés longitudinaux (22) et les aimants permanents (18, 18-1, 18-2).

4. Moteur linéaire selon la revendication 2 ou 3, **caractérisé en ce qu'**il est prévu sur chacun des côtés longitudinaux (22) un rail de support (24), de préférence sous la forme d'un profilé bombé vers l'extérieur qui dépasse en particulier latéralement du module de stator (16-1, 16-2).

5. Moteur linéaire selon l'une des revendications précédentes, **caractérisé en ce qu'**il est prévu sur le dispositif formant rotor (12) un blindage magnétique (46, 48) sur lequel sont formés des éléments de blindage (46) entourés chacun par une bobine (44), étant précisé que les éléments de blindage (46) sont de préférence tournés vers les aimants permanents (18, 18-1, 18-2), et sont en particulier dirigés vers le bas à partir du dispositif formant rotor (12) par rapport à une disposition de fonctionnement sur le dispositif formant stator (14), et dépassent de préférence des bobines (44) vers le bas.

6. Moteur linéaire selon l'une des revendications précédentes, **caractérisé en ce que** le ou les modules de stator (16-1, 16-2) comportent des première et seconde extrémités de modules (54, 56), étant précisé que les extrémités de modules (54, 56) sont conçues de telle sorte qu'une liaison par complémentarité de forme puisse être réalisée ou soit réalisée entre une première extrémité (54) d'un premier module de stator (16-1) et une seconde extrémité (56) d'un second module de stator (16-2).

7. Moteur linéaire selon la revendication 6, **caractérisé en ce que** la première extrémité (54) du module de stator comporte un segment de liaison (58) qui dépasse dans le sens longitudinal, et **en ce que** la seconde extrémité de module (56) présente un logement de liaison (60), formé dans le sens longitudinal, de telle sorte qu'à l'état relié de deux modules de stator (16-1, 16-2) voisins, la liaison par complémentarité de forme puisse être réalisée ou soit réalisée entre le segment de liaison (58) du premier module de stator (16-1) et le logement de liaison (60) du second module de stator (16-2).

8. Moteur linéaire selon l'une des revendications précédentes, **caractérisé en ce qu'**il est prévu sur le ou les modules de stator (16-1, 16-2) plusieurs pistes de mesure (40, 40-1, 40-2, 40-3), de préférence une piste de mesure pour balayer une position absolue sur le module de stator concerné, de préférence une piste de mesure pour balayer des incréments prédéfinis le long du module de stator, et de préférence une piste de mesure qui identifie le module de stator à l'intérieur de l'unité de stator.

9. Moteur linéaire selon la revendication 8, **caractérisé en ce que** les ensembles capteurs (52-1, 52-2) prévus sur le dispositif formant rotor (12) sont conçus de manière à pouvoir balayer lesdites pistes de mesure (40, 40-1, 40-2, 40-3), étant précisé qu'ils comprennent de préférence plusieurs capteurs, qui sont associés à une piste de mesure respective (40, 40-1, 40-2, 40-3).

10. Moteur linéaire selon l'une des revendications précédentes, **caractérisé en ce que** le dispositif formant rotor (12) comprend un circuit pour commander le flux de courant dans les bobines (44), étant précisé que le circuit est de préférence installé pour produire dans les bobines (44), en fonction de la position du moment du dispositif formant rotor (12) et d'une position à approcher souhaitée, un flux de courant correspondant afin de produire le déplacement voulu du dispositif formant rotor (12) par rapport au dispositif formant stator (14).

11. Moteur linéaire selon la revendication 10, **caractérisé en ce que** le circuit est installé pour définir la position ou/et la vitesse ou/et l'accélération du dispositif formant rotor (12) par rapport au dispositif formant stator (14), étant précisé qu'il comprend de préférence un dispositif d'analyse qui est installé pour produire des signaux dépendants de la position, sur la base de signaux de balayage qui sont enregistrés par les ensembles capteurs (52-1, 52-2).

12. Moteur linéaire selon l'une des revendications précédentes, **caractérisé en ce que** le dispositif formant rotor est relié à une source de courant et de préférence à une unité de commande d'un dispositif supérieur.

13. Dispositif de pipetage automatique comprenant au moins un moteur linéaire selon l'une des revendications précédentes, étant précisé que le ou les moteurs linéaires sont destinés à déplacer un pipeteur du dispositif de pipetage automatique.

14. Dispositif formant stator d'un moteur linéaire (10) avec plusieurs aimants permanents (18, 18-1, 18-2) de polarisations différentes et avec au moins un rail de support (24) pour un dispositif formant rotor (12) du moteur linéaire (10), étant précisé que le dispositif formant rotor (12) et le dispositif formant stator (14) sont mobiles suivant un mouvement de va-et-vient l'un par rapport à l'autre le long d'un sens de déplacement (FR) fixé par le rail de support (24),
**caractérisé en ce que** le dispositif formant stator (14) est formé à partir d'au moins un module de stator (16-1, 16-2) avec des première et seconde extrémités (54, 56), étant précisé que les extrémités de modules (54, 56) sont conçues de telle sorte qu'une liaison par complémentarité de forme puisse être réalisée entre une première extrémité (54) d'un premier module de stator (16-1) et une seconde extrémité (56) d'un second module de stator (16-2), de préférence de telle sorte que l'écartement (L) des deux modules de stator (16-1, 16-2) reliés soit inférieur à 1 millimètre, étant précisé qu'il est prévu sur le module de stator (16-1, 16-2) au moins une piste de mesure (40, 40-1, 40-2, 40-3) qui est apte à être balayée par un ensemble capteur (52-1, 52-2) du dispositif formant rotor (12) et qui s'étend globalement parallèlement au sens de déplacement (FR), et que sur des modules de stator (16-1, 16-2) voisins, la piste de mesure est identique.

15. Dispositif formant rotor d'un moteur linéaire (10) avec au moins trois bobines électriques (44) et au moins un moyen de support (26) apte à s'appuyer contre un rail de support (24) d'un dispositif formant stator (14) du moteur linéaire (10), étant précisé que le dispositif formant rotor (12) et le dispositif formant stator (14) sont mobiles suivant un mouvement de va-et-vient l'un par rapport à l'autre le long d'un sens de déplacement (FR), grâce à l'interaction des champs magnétiques des aimants permanents (18, 18-1, 18-2) du dispositif formant stator (14) avec le champ magnétique des bobines (44) traversées au besoin par le courant,
**caractérisé en ce que** le dispositif formant rotor (12) est installé de manière à pouvoir être couplé à un dispositif formant stator (14) selon la revendication 14, et **en ce qu'**il est prévu sur le module formant rotor (12) au moins deux ensembles capteurs (52-1, 52-2) qui sont disposés avec un écartement (SA) dans le sens de déplacement (FR) du dispositif formant rotor (12), de telle sorte que dans le cas où le dispositif formant rotor (12) est disposé à une jonction (64, L) entre deux modules de stator (16-1, 16-2), chacune des pistes de mesure (40, 40-1, 40-2, 40-3) identiques prévues sur les modules de stator voisins puisse être balayée par l'un des deux ensembles capteurs (52-1, 52-2).
